# EUROPÄISCHE PATENTSCHRIFT

(11) **EP 1 403 108 B1**
(45) Veröffentlichungstag und Bekanntmachung des Hinweises auf die Patenterteilung: **21.07.2004**
(21) Anmeldenummer: 02405839.8
(22) Anmeldetag: 30.09.2002
(51) Int. Cl.: B60J 1/00, C03C 27/04, E06B 3/56

(54) **Verfahren und Befestigungssystem zur Montage einer Fahrzeugscheibe an einem Tragrahmen, eine Fahrzeugscheibe und ein Fahrzeug mit einer solchen Scheibe**
Method and fixing system for mounting a vehicle window to a frame, a vehicle window and a vehicle with such a window
Procédé et système de fixation pour monter une vitre de véhicule sur un chassîs de support, une vitre de véhicule et un véhicule équipée avec une telle vitre

(43) Veröffentlichungstag der Anmeldung: 31.03.2004
(73) Patentinhaber: Eftec Europe Holding AG, 6304 Zug (CH)
(72) Erfinder: Gloor, Urs, 9320 Arbon (CH); Schmitz, Franz Peter, 21335 Lüneburg (DE)
(74) Vertreter: Hepp, Dieter

(56) Entgegenhaltungen:
- EP-B- 0 351 369
- EP-B- 0 422 516
- DE-A- 4 311 584
- DE-A- 4 326 179
- US-A- 6 136 427

## Beschreibung

Die Erfindung betrifft ein Verfahren und ein Befestigungssystem zur Montage einer Fahrzeugscheibe, insbesondere an einem Tragrahmen eines Fahrzeugs, sowie eine Fahrzeugscheibe zur Direktverglasung und ein Fahrzeug mit den Merkmalen der Oberbegriffe der unabhängigen Patentansprüche.

Die Verglasung von Fahrzeugen ist mit einer Vielzahl verfahrenstechnischer Probleme behaftet. Typischerweise werden auf Polyurethanen basierende Klebedichtungsmassen zur Verglasung von Fahrzeugen verwendet, welche eine relativ lange Aushärtungszeit benötigen. Während dieser Aushärtungszeit ist die eingesetzte Scheibe aufgrund des gewünschten kontinuierlichen Weitertransports auf einer Fertigungsstrasse ständigen Vibrationen und Erschütterungen ausgesetzt, welche zum Verrutschen der Scheibe führen können. Eine derartige Veränderung der Position führt zu einer ungenauen Passung, wodurch sich Fehler in den Klebedichtfugen ergeben sowie Undichtigkeiten entstehen können. Zudem kann ein Verrutschen der Scheibe aus ihrer beabsichtigten Position den umlaufend verbleibenden Spalt zur Karosserie zumindest stellenweise derart verkleinern, dass ein eventuelles Anbringen einer umlaufenden Dichtlippe unmöglich wird. Darüber hinaus kann ein Verrutschen der Scheibe auch einen Stabilitätsverlust des gesamten Fahrzeugs bewirken, da Fehler der als tragendes Bauteil fungierenden Verglasung sich auf die Statik des Fahrzeugs auswirken. Ueberdies führt insbesondere partiell konzentrierte Druckbelastung der Scheibe während des Aushärtungsprozesses zu ungleichmässig ausgeprägten Klebeflachen, was in einem extremen Szenario bis hin zu stellenweise seitlich hervorquellender Klebedichtungsmasse führen kann. Aus diesen Gründen sind eine Vielzahl von Anstrengungen unternommen worden, diese genannten Probleme zu lösen oder zu umgehen.

Aus dem Dokument EP-B1-0 422 516 ist ein zur Verklebung mit einem weiteren Material vorgerüsteter Glaskörper bekannt. Hierbei ist ein gehärtetes Profil eines ersten Klebstoffs als Abstandshalter und Klebstoffbremse vorgesehen. Optional befindet sich in einem oberen Bereich des Profils in einer Vertiefung ein Haftklebstoff, welcher die Funktion des sofortigen Fixierens der Scheibe hat; hierbei kann es sich bspw. um ein Klebeband handeln. Im Zwischenraum des Profils des ersten Klebstoffs befindet sich ein zweiter Klebstoff, welcher langsam aushärtet und die dauerhafte Verbindung mit einem weiteren Substrat bewirkt. Nachteilig hierbei ist insbesondere die notwendige Vorrüstung der Scheibe mit einem gehärteten Profil eines ersten Klebstoffs. Zudem können sich Kompatibilitätsprobleme durch den Kontakt von bis zu drei verschiedenen Klebstoffkomponenten ergeben. Weiter ist nachteilig, dass nur beschränkte Luftzufuhr zu dem im Zwischenraum des Profils befindlichen Klebstoff erfolgt, was für eine rasche Härtung nachteilig ist.

Aus der EP 312 496 ist ein Verfahren bekannt, bei welchem eine erste Klebedichtungsmasse eine wannenförmige Vertiefung bildet, in der sich eine zweite Klebedichtungsmasse befindet. Die erste Klebedichtungsmasse ist vor dem Einsetzen der Verglasung bereits ausgehärtet und soll einerseits das Austreten der noch plastisch verformbaren zweiten Klebedichtungsmasse verhindern, andererseits als Referenz für das Einsetzen der Verglasung in einen Rahmen dienen. Ein solches Verfahren verhindert unsaubere Klebeflächen und insbesondere ein Hervorquellen von Klebedichtungsmasse. Es basiert jedoch in einer effizienten Ausführungsform auf der Bereitstellung einer montagefertigen Windschutzscheibe, bei welcher die zweite Klebedichtungsmasse bis zum Zeitpunkt der Weiterverarbeitung durch eine Folie o. dgl. innerhalb der wannenförmig ausgehärteten ersten Klebedichtungsmasse geschützt ist. Solche Varianten haben sich in der Praxis als nur beschränkt durchführbar erwiesen. Die alternative vor-Ort-Bestückung einer Windschutzscheibe mit einem wannenförmig auszuhärtenden Strang erster Klebedichtungsmasse und anschliessendem Einbringen eines zweiten Stranges Klebedichtungsmasse ist vergleichsweise arbeitsaufwendig.

Durch die US 6 406 782 ist ein mehrschichtiges Klebeband bekannt, welches aus einer deformierbaren, unter Betriebsbedingungen schmelzflussresistenten Mittelschicht sowie aussenliegenden Klebeschichten besteht. Die Anwendung zum Verkleben einer Windschutzscheibe in Kraftfahrzeuge ist beschrieben, insbesondere auch die Verwendung von photo-induzierbaren und thermisch härtbaren Klebedichtungsmassen für die beiden aussenliegenden Klebeschichten. Ein Verfahren unter Verwendung eines derartigen (oder ähnlichen) Klebebandes überwindet das Problem ungleichmässiger Klebeflächen und insbesondere das Hervorquellen von Klebedichtungsmasse(n). Allerdings ergibt sich bei der Verwendung eines solchen Klebebandes als Endlos-Ware ein Diskontinuitätsproblem im Bereich der Nahtstelle zwischen Anfang und Ende des angebrachten Klebebandes. Zudem können Klebebänder prinzipbedingt etwaigen Unebenheiten sowohl der Scheibe als auch des Rahmens nicht ähnlich gut folgen und diese so ausgleichen wie eine in flussiger bzw. viskoser Form zu applizierende Klebedichtungsmasse. Daher haben sich derartige Klebebänder in der Praxis auch aus Stabilitätsgründen der resultierenden Verklebung von Scheibe und Tragrahmen bisher nicht durchsetzen können.

Aus der EP 318 542 ist ein Verfahren zum zumindest teilweisen Aushärten von Dicht- und Klebemitteln, insbesondere bei der Direktverglasung von Kraftfahrzeugen bekannt, bei dem zumindest ein Teilbereich des Dicht- oder Klebemittels durch Einstrahlung von Mikrowellen erwärmt wird. Dieses Verfahren beruht auf dem Einsatz einer auf Polyurethanen basierenden Klebedichtungsmasse, welche sowohl hitze- als auch feuchtigkeitshartend ist. Nach dem Einsetzen der Fahrzeugscheibe wird hierbei die Klebedichtungsmasse punktuell mit Mikrowellenenergie beaufschlagt und ausgehärtet, wodurch die Verglasung im weiteren Aushärtungsprozess der restlichen Klebedichtungsmasse in ihrer Lage fixiert bleibt. In der Praxis erweist es sich hierbei jedoch als notwendig, die Karosserie im Bereich der Fixierungsverklebung vorzuwärmen, um eine übermassige Ableitung von zugefuhrter Wärmeenergie über das Metall zu vermeiden.

Aus der DE 42 10 277 ist ein Verfahren unter Benutzung einer Klebedichtmasse bekannt, welche sowohl eine bei Raumtemperatur flüssige und als auch eine bei Raumtemperatur feste Komponente beinhaltet. Die Auftragung erfolgt hier bei einer Temperatur, bei welcher beide Komponenten flüssig sind. Durch anschliessendes Abkühlen wird eine Fixierung der zu verklebenden Komponente über die bei Raumtemperatur feste Komponente erzielt. Nachteilig ist bei diesem Verfahren unter anderem, dass die Abkühlung von der Umgebungstemperatur abhängig ist und daher unkontrolliert verlauft: Höhere Umgebungstemperaturen resultieren in längeren Härtungszeiten der Klebedichtmasse. Die sich hieraus ergebenden zeitlichen Schwankungen im Arbeitsablauf sind unvorteilhaft besonders in Verbindung mit Fliessband-Fertigungsanlagen, da hier eine hohe Reproduzierbarkeit der Arbeitsabläufe erforderlich ist.

Zur Vorbeugung gegen das Verrutschen einer Verglasung während der Aushärtung der Klebedichtungsmasse werden in der Praxis oftmals Fixierhilfen wie beispielsweise Klebestreifen zwischen Scheibe und Karosserie verwendet. Auch diese Verfahren sind jedoch aufgrund des unweigerlichen manuellen Mehraufwands nicht optimal.

Es ist deshalb eine Aufgabe der vorliegenden Erfindung, die Nachteile des Bekannten zu überwinden, insbesondere ein Verfahren und eine Vorrichtung bereitzustellen, welche es erlauben, eine Verglasung schnell, einfach und zuverlässig in ihrer Lage zu fixieren, ohne die bewährten Eigenschaften beispielsweise der konventionellen Polyurethan-Klebedichtungsmittel verändern oder aufgeben zu müssen. Eine weitere Aufgabe der vorliegenden Erfindung besteht darin, ein Verfahren und eine Vorrichtung zur Direktverglasung von Fahrzeugen bereitzustellen, welches möglichst ohne kostenintensive Umbauten existierender Fertigungsstrassen und dementsprechend einfach und ökonomisch einsetzbar ist.

Erfindungsgemass werden diese Aufgaben mit einem Verfahren und einer Fahrzeugscheibe mit den Merkmalen der unabhängigen Patentansprüche gelöst.

Die Erfindung betrifft ein Verfahren zum Befestigen einer Verglasung an einem Tragrahmen, insbesondere anwendbar bei der Direktverglasung von Fahrzeugen. Hierbei kommt eine erste, strangförmig den Randbereich der Scheibenhauptfläche umlaufende, bevorzugterweise auf Polyurethanen basierende Klebedichtungsmasse zum Einsatz. Diese kann wahlweise vor dem Einsetzen der Scheibe in den Tragrahmen auf die Scheibe selbst oder auf den Tragrahmen aufgetragen werden. Zusatzlich wird vor dem Einsetzen der Verglasung eine weitere, zweite Klebemasse wenigstens in einem Teilbereich des Gesamtumfangs des genannten Randbereichs wahlweise auf die Scheibe oder auf den Tragrahmen appliziert. Idealerweise werden die erste Klebedichtungsmasse und die zweite Klebemasse derart aufgetragen, dass sie nach dem Einsetzen der Scheibe in den Tragrahmen voneinander räumlich getrennt sind, um etwaige Kompatibilitätsprobleme von vornherein zu vermeiden. Die zweite Klebemasse ist hierbei schneller härtbar als die erste Klebedichtungsmasse. Unter "schneller härtbar" sind hierbei insbesondere Aushärtungszeiten von weniger als 5 Minuten zu verstehen, bevorzugterweise von 0.5 Sekunden bis 60 Sekunden, idealerweise von 0.5 Sekunden bis 5 Sekunden, wobei die Aushärtung der zweiten Klebemasse durch einen kontrollierbaren äusseren Energieeinfluss initiiert werden kann. Das untere Zeitlimit ist hierbei lediglich über Randbedingungen des Verfahrens definiert und kann beliebig klein werden in Abhängigkeit von der verwendeten Klebemasse, der Intensität des Energieeinflusses, etc. In jedem Falle wird die Scheibe zunächst durch die im Vergleich zur ersten Klebedichtungsmasse schnelle und selektive Härtung lediglich der zweiten Klebemasse in der gewünschten Lage fixiert. Dadurch wird ein störungsfreies und homogenes Aushärten der ersten Klebedichtungsmasse gewährleistet. An die Dauerhaftigkeit der durch die zweite Klebemasse hergestellten Verbindung von Verglasung und Tragrahmen ist hierbei lediglich die Anforderung gestellt, dass diese zumindest so lange die Scheibe in der eingesetzten Position halten kann, bis die erste Klebedichtungsmasse ausgehärtet ist. Jedoch ist die Elastizität der durch die zweite Klebemasse hergestellten Verbindung von Scheibe und Tragrahmen idealerweise ähnlich einzustellen wie diejenige der durch die erste Klebedichtungsmasse erzeugten Verbindung im ausgeharteten Zustand, um einer unerwünschten Neutralisierung der durch die erste Klebedichtungsmasse gewährleisteten Dauerelastizität der Klebedichtungsverbindung entgegenzuwirken.

In einer besonders vorteilhaften Ausführungsform wird als zweite Klebemasse eine lichtvernetzende Klebemasse eingesetzt. Unter einer lichtvernetzenden Klebemasse wird hier und im folgenden eine Klebemasse verstanden, welche durch Bestrahlung mit Licht im Wellenlängenbereich von ca. 300 nm bis ca. 780 nm gehärtet werden kann. Die Sensitivität einer solchen Klebemasse kann also ausdrücklich sowohl den UVA, UVB und/oder den sichtbaren Spektralbereich umfassen.

In einer weiteren geeigneten Ausführungsform wird als zweite Klebemasse eine mittels Wärmezufuhr härtbare Klebemasse eingesetzt. Diese Klebemasse wird nach dem Einsetzen der Scheibe in den Tragrahmen mittels Wärmezufuhr gehärtet. Als Wärmequellen sind konventionelle Heizstrahler, Infrarot-Lampen o. dgl. einsetzbar.

In einer besonders vorteilhaften Ausgestaltungsform wird die Wärme speziell in dem Bereich der aufgetragenen zweiten Klebemasse mittels eines Mikrowellen-Strahlers zugeführt, um so eine gleichmässige Erwärmung der zweiten Klebemasse zu gewährleisten und damit die homogene Aushärtung der entsprechenden Klebestellen einzuleiten.

Obschon bei den genannten Ausführungsformen vorteilhaft die Initiierung der Aushärtung der zweiten Klebemasse nach dem Einpassen der Scheibe erfolgen kann, ist selbstverständlich bei ausreichender Latenzzeit bis zur Härtung der zweiten Klebemasse auch die Beaufschlagung mit Wärme oder Licht bereits vor dem Einsetzen der Verglasung in den Tragrahmen möglich.

In einer geeigneten Abwandlung der genannten Ausfuhrungsformen wird als zweite Klebemasse eine Zwei-Komponenten (2K) Klebemasse eingesetzt, welche vor dem Einsetzen der Scheibe entweder auf den Tragrahmen oder auf die Scheibe aufgetragen wird. Bevorzugterweise härtet diese eingesetzte 2K Klebemasse nach dem Mischen der beiden Komponenten binnen weniger als 5 Minuten, idealerweise zwischen 5 Sekunden und 120 Sekunden aus. Die Härtung der 2K-Klebemasse kann selbstverständlich nach dem Auftragen ebenfalls durch Wärmezufuhr zusätzlich beschleunigt werden. Als Wärmequellens sind konventionelle Heizstrahler, Infrarot-Lampen o. dgl. einsetzbar.

In allen genannten Ausführungsformen ist es vorteilhaft, die zweite Klebemasse lediglich lokal begrenzt bezogen auf die gesamte Klebefläche einzusetzen. Bevorzugterweise werden hierfür gegenüberliegende (Eck-)Punkte und/oder Kanten der Scheibe oder des Tragrahmens gewählt, um nach Härtung der zweiten Klebemasse eine ausreichende Fixierung der Scheibe in der gewünschten Position zu gewährleisten, so dass keine Veränderung dieser Position mehr z.B. durch die auf Fertigungsstrassen unvermeidlichen Vibrationen und Erschütterungen stattfinden kann.

In dem vorstehend beschriebenen Ausführungsbeispiel beinhaltend eine lichtvernetzende zweite Klebemasse ist es im Falle der Bestrahlung nach dem Einsetzen der Scheibe bevorzugt, dass die Scheibe zumindest in dem Bereich der eingesetzten zweiten Klebemasse durchlässig ist für Licht desjenigen Spektralbereichs, mit welchem die Härtung der zweiten Klebemasse initiiert werden kann. Im Fahrzeugbau werden typischerweise im Bereich der Klebedichtungsverbindung zwischen Scheibe und Tragrahmen umfassende Abdeckungen verwendet, welche undurchlässig sind für Licht des UV- und/oder des sichtbaren Spektralbereichs. Im Falle der Verwendung einer zweiten lichtvernetzenden Klebemasse können entsprechende Aussparungen der genannten Abdeckung vorgesehen werden, durch welche hindurch eine Bestrahlung der zweiten Klebemasse vorgenommen werden kann. In einer besonders vorteilhaften Ausführungsform wird lediglich die zweite Klebemasse exakt unterhalb der Aussparung in der genannten Abdeckung appliziert, wohingegen die erste Klebedichtungsmasse durch die genannte Abdeckung nach dem Einsetzen der Scheibe in den Tragrahmen vollständig verdeckt wird.

In einer besonders vorteilhaften Ausführungsform ist der Tragrahmen zur Aufnahme der Scheibe mit punktuellen und/oder partiellen Erhöhungen versehen. Auf diesen Erhöhungen wird die zweite Klebemasse appliziert. Hierdurch kann die aufzubringende Menge der zweiten Klebemasse reduziert werden, ohne dass der verbleibende Abstand zwischen der Scheibe und den nicht erhöhten Bereichen des Tragrahmens reduziert werden muss. Eine derartig erzielbare Verringerung der aufzubringenden Menge der zweiten Klebemasse ist einerseits aus Kostengründen angezeigt. Darüber hinaus kann insbesondere bei Verwendung einer lichtvernetzenden zweiten Klebemasse und einer etwaigen starken Tönung der Scheibe die Härtung infolge der geringeren Schichtdicke erleichtert werden.

Bei der Verwendung einer zweiten, lichtvernetzenden Klebemasse ist es bevorzugt, eine Scheibe bereitzustellen, bei welcher die typischerweise die Scheibe im Verklebungsbereich gänzlich umlaufende, für UV-Strahlung und Licht des sichtbaren Spektralbereichs undurchlässige Abdeckung mit Aussparungen versehen ist, durch welche hindurch eine Bestrahlung der zweiten Klebemasse möglich ist. An die Art der Abdeckung sind ausser der Dauerhaltbarkeit unter den vorgesehenen Betriebsbedingungen keine Vorbedingungen gestellt, so dass alle gängigen Varianten, insbesondere auch Folien oder aufgesinterte Keramik, verwendet werden können.

Sämtliche beschriebenen Verfahren sind allgemein anwendbar bei Verglasungen jeglicher Art, jedoch besonders vorteilhaft bei der Direktverglasung von Fahrzeugen. Beispielsweise wird eine Windschutzscheibe mittels einer ersten, den Randbereich der Scheibenhauptfläche strangformig umlaufenden Klebedichtungsmasse an einem Tragrahmen befestigt. Die Scheibe wird zumindest bis zur ausreichenden Härtung dieser ersten Klebedichtungsmasse mittels einer zweiten Klebemasse fixiert. Ausreichend bedeutet in diesem Zusammenhang, dass die Verbindung stark genug ist, um die Scheibe unter den Betriebsbedingungen einer Fertigungsstrasse in ihrer gewünschten Lage zu halten. Die Applikation der zweiten Klebemasse ist hierbei lediglich in Teilbereichen des Randbereichs der Scheibenhaupfläche notwendig, bevorzugterweise an gegenüberliegenden (Eck-)Punkten und/oder Kanten.

Ein spezieller Aspekt der vorliegenden Erfindung besteht also in der Verwendung einer zusatzlichen zweiten Klebemasse. Diese wird räumlich getrennt neben der ersten Klebedichtungsmasse aufgetragen und ist schneller härtbar als die erste Klebedichtungsmasse, wobei unter "schneller härtbar" insbesondere Aushärtungszeiten von weniger als 5 Minuten zu verstehen sind, bevorzugterweise von 0.5 Sekunden bis 60 Sekunden, idealerweise von 0.5 Sekunden bis 5 Sekunden.

Ein weiterer Vorteil der vorliegenden Erfindung ist die Möglichkeit der Bereitstellung eines Befestigungs-Kits zum Montieren einer Scheibe an einem Tragrahmen einer Karosserie, das sich speziell durch unkomplizierte und kostengünstige Anwendung auszeichnet, welche weder aufwendige Umbauten existierender Fertigungsstrassen noch vorgerüstete Scheiben voraussetzt. Ein solches Befestigungskit beinhaltet eine erste Klebedichtungsmasse, welche sich sowohl durch Dauerelastizitat als auch hohe Belastbarkeit auszeichnet, bevorzugterweise eine der bei der Direktverglasung von Kraftfahrzeugen bewährten, auf Polyurethanen basierenden Klebedichtungsmassen. Darüber hinaus wird eine zweite Klebemasse bereitgestellt, welche durch einen der genannten kontrollierbaren äusseren Energieeinflüsse wie Bestrahlung mit Licht des UVA-, UVBund/oder des sichtbaren Spektralbereichs, Wärmezufuhr o. dgl. schneller härtbar ist als die erste Klebedichtungsmasse, wobei unter "schneller härtbar" hierbei insbesondere Aushärtungszeiten von weniger als 5 Minuten zu verstehen sind, bevorzugterweise von 0.5 Sekunden bis 60 Sekunden, idealerweise von 0.5 Sekunden bis 5 Sekunden.

Ein zusätzlicher Aspekt der vorliegenden Erfindung besteht in der Einfachheit einer Anordnung zur Anwendung einer der vorgennanten Verfahren in einer Fertigungsstrasse. In einer bevorzugten Ausführungsform einer solchen Anordnung ist der die Scheibe in den Tragrahmen einsetzende Greifer direkt mit wenigstens einer geeigneten Vorrichtung versehen, um den notwendigen äusseren Energieeinfluss zur Härtung der zweiten Klebemasse auszuüben, beispielsweise also eine oder mehrere Lampe(n), insbesondere UV-Lampe(n). Selbstverständlich ist auch eine separate Anordnung des Greifers zum Einfügen der Verglasung und der Lampe(n) o. dgl. möglich. Nach dem Einsetzen der Verglasung wird die Scheibe noch von dem Greifer in Position gehalten, während die zweite Klebemasse selektiv zum Härten gebracht wird. In einer vom Installationsaufwand her besonders einfachen Ausführungsform wird die Scheibe lediglich für die zur Härtung der zweiten Klebemasse notwendige Zeit in ihrer Position im Tragrahmen gehalten, währenddessen eine Lampe o. dgl. manuell über die zu härtende zweite Klebemasse gehalten oder bewegt wird. Selbstverständlich kann das Einsetzen und Halten der Scheibe in dem Tragrahmen während der Beaufschlagung mit dem äusseren Energieeinfluss auch mittels manuell bedienbarer Greifvorrichtungen erfolgen. Erst anschliessend wird der Greifer entfernt, wobei die Verglasung nun durch die zweite Klebemasse in ihrer Position fixiert bleibt, ungeachtet der noch plastisch verformbaren ersten Klebedichtungsmasse.

Die Erfindung wird nachfolgend in Ausführungsbeispielen und anhand der Zeichnungen naher erläutert. Es zeigen:
- Abb. 1:: schematisch eine in den Tragrahmen eines Fahrzeugs einzusetzende Scheibe;
- Abb. 2:: eine Schnittzeichnung des Verbindungsbereichs zwischen Tragrahmen und Verglasung;
- Abb. 3:: eine Schnittzeichnung des Verbindungsbereichs zwischen Tragrahmen und Verglasung, wobei die zweite Klebemasse auf einer erhabenen Position des Tragrahmens aufgebracht ist;
- Abb. 4:: exemplarisch eine Windschutzscheibe mit partiellen Aussparungen der Randabdeckung zur gezielten Transmission von UV-Strahlung und/oder Licht des sichtbaren Spektralbereichs;
- Abb. 5a bis 5d:: verschiedene vorteilhafte Anordnungen der ersten und zweiten Klebedichtungsmasse auf einer Verglasung oder einem Tragrahmen;
- Abb. 6:: alternative Anordnungen zum Befestigen einer Scheibe an einem Tragrahmen einer Fahrzeugkarosserie.

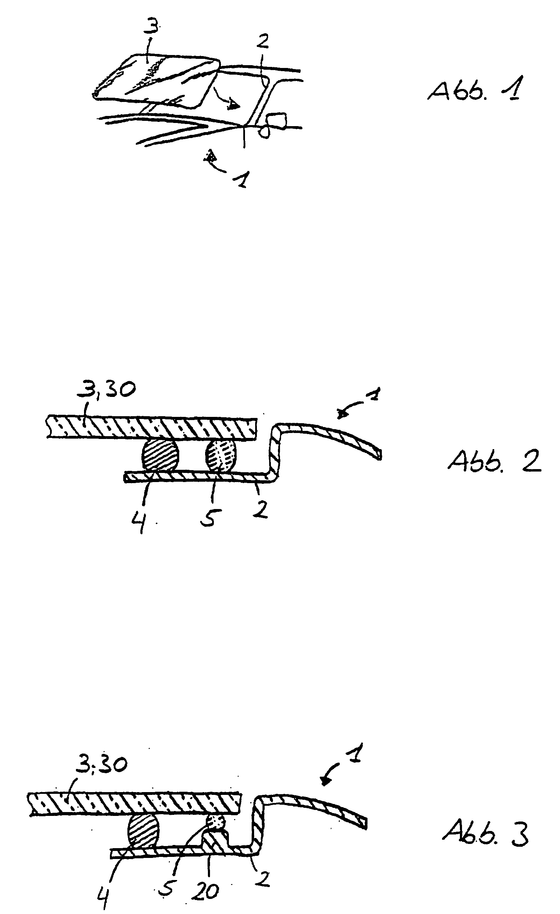

In Abbildung 1 ist schematisch eine Fahrzeugkarosserie 1 gezeigt, bei welcher in dem gezeigten Fall eine Windschutzscheibe 3 in den hierfür vorgesehenen Tragrahmen 2 einzusetzen ist. Bei diesem Vorgang ist eine schnelle und zumindest vorläufige Fixierung der Scheibe ungeachtet der langsam aushärtenden, gewohnlich auf Polyurethanen basierenden Klebedichtungsmasse erwünscht, um ein Verrutschen der Verglasung und daraus resultierenden Beeinträchtigungen der Verklebung durch Vibrationen und/oder Erschütterungen während des Aushärtens der Klebedichtungsmasse vorzubeugen.

Abbildung 2 zeigt die Verbindung zwischen einer Windschutzscheibe 3 bzw. 30 (vergl. Abb. 4) und einer Fahrzeugkarosserie 1 im Querschnitt in einem Bereich, in welchem zur Befestigung eine erste Klebedichtungsmasse 4 und eine zweite Klebemasse 5 verwendet wurden, die räumlich voneinander getrennt, nebeneinander aufgetragen wurden. Hierbei ist es von untergeordneter Bedeutung, ob die Klebedichtmasse 4 oder die Klebemasse 5 in dem gezeigten Querschnitt dem Scheibenrand näher ist. Wesentlich ist lediglich, dass die erste Klebedichtungsmasse 4 den gesamten Verklebungsbereich der Windschutzscheibe 3 bzw. 30 strangförmig umläuft, wohingegen die zweite Klebemasse 5 lediglich punktuell und/oder partiell appliziert wird. Durch einen kontrollierbaren äusseren Energieeinfluss (UV-Bestrahlung, Bestrahlung mit Licht des sichtbaren Spektralbereichs, Mikrowellen-Bestrahlung, etc.) wird die schnelle Härtung der zweiten Klebemasse 5 initiiert, wodurch im weiteren Verlauf die Windschutzscheibe 3 bzw. 30 in ihrer gewünschten Position fixiert ist. Dies gewährleistet ein störungsfreies Aushärten der ersten Klebedichtungsmasse 4 ungeachtet etwaiger Vibrationen und/oder Erschütterungen beim Weitertransport auf einer Fertigungsstrasse.

Abbildung 3 zeigt in Analogie zu Abbildung 2 die Verbindung zwischen einer Windschutzscheibe 3 bzw. 30 (vergl. Abb. 4) und einer Fahrzeugkarosserie 1 im Querschnitt in einem Bereich, in welchem zur Befestigung eine erste Klebedichtmasse 4 und eine zweite Klebemasse 5 verwendet wurden, die räumlich voneinander getrennt, nebeneinander aufgetragen wurden. Im Unterschied zu dem in Abbildung 2 gezeigten Ausführungsbeispiel ist die zweite Klebemasse 5 hier auf einer partiellen Erhöhung 20 innerhalb des Tragrahmens 2 aufgebracht. Hierdurch kann die aufzuwendende Menge der Klebemasse 5 reduziert werden, ohne dass der verbleibende Abstand zwischen Windschutzscheibe 3 bzw. 30 und den nicht erhöhten Bereichen des Tragrahmens reduziert werden muss. Eine Verringerung der Menge der Klebemasse 5 ist einerseits aus Kostengründen vorteilhaft. Darüber hinaus kann insbesondere bei Verwendung einer lichtvernetzenden Klebemasse 5 und einer etwaigen starken Tönung der Windschutzscheibe 3 bzw. 30 die Härtung durch die geringere Schichtdicke erleichtert werden. Idealerweise ist die Oberfläche der Erhöhung 20 auf der zur Windschutzscheibe 3 gewandten Seite zu dieser parallel. Die Anzahl sowie die räumliche Erstreckung der Erhöhung(en) 20 sind idealerweise den jeweiligen Applikationszonen der zweiten Klebemasse angepasst.

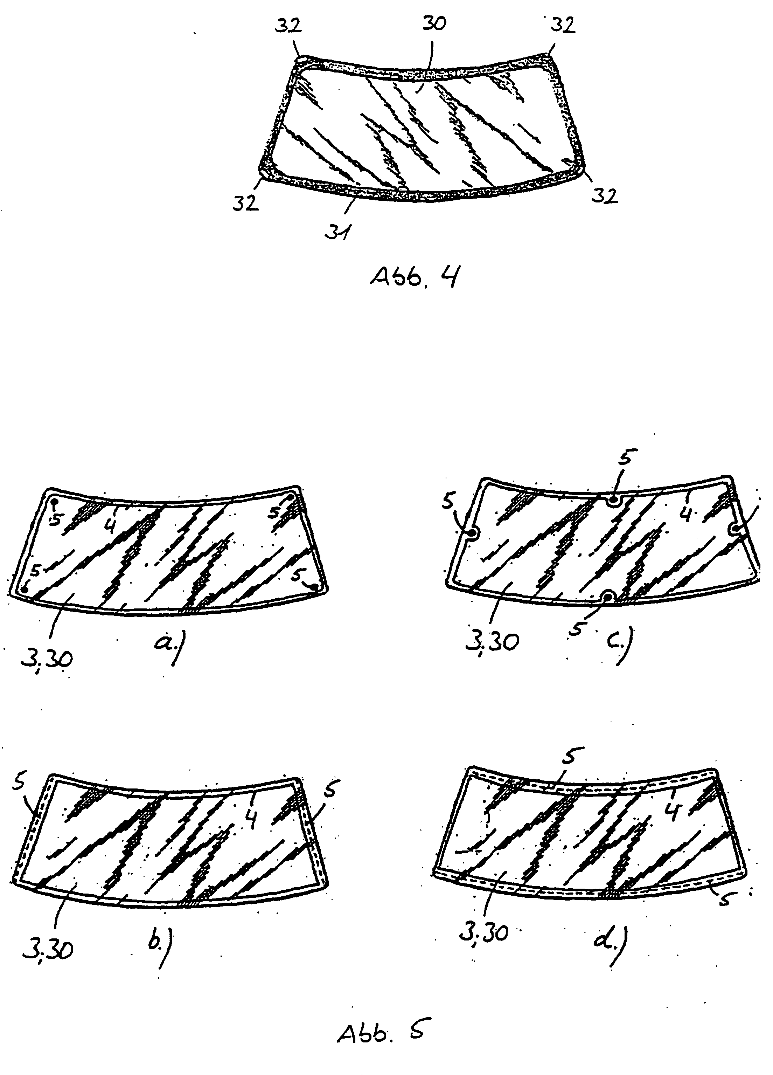

Abbildung 4 zeigt exemplarisch eine Windschutzscheibe 30, bei welcher im Randbereich umlaufend eine für Licht des UV- und des sichtbaren Spektralbereichs undurchlässige Abdeckung 31 zum Schutz der darunterliegenden Klebedichtmassen angebracht ist. Bei solchen Abdeckungen, wie sie im Automobilbau verwendet werden, handelt es sich typischerweise um aufgesinterte Keramik; aber auch der Einsatz von Folien o. dgl. ist möglich. Die gezeigte Scheibe 30 weist spezifische Aussparungen 32 innerhalb dieser Abdeckung 31 auf, so dass im Bereich dieser Aussparungen 32 die Transmission von Licht des sichtbaren Spektralbereichs bzw. von UV-Strahlung durch die Scheibe hindurch erfolgen kann. Diese Konstellation ermöglicht es, dass eine unterhalb der Aussparungen 32 zu applizierende lichtvernetzende zweite Klebemasse durch Bestrahlung von aussen mit einer Strahlungsquelle gehärtet werden kann. Die unterhalb der Abdeckung 31 befindliche erste Klebedichtmasse hingegen bleibt vor der Strahlung geschützt. Die Anzahl und Positionen der Aussparungen 32 sind in dem gezeigten Beispiel willkürlich gewählt; weitere geeignete Positionen sind beispielsweise auch die Mittelpunkte der Scheibenrandbereiche oder auch ganze Bereiche der Scheibenränder (vergl. Abb. 5a bis 5d). Vorteilhafterweise sind jedoch mindestens zwei Aussparungen 32 vorzusehen, welche idealerweise an gegenüberliegenden Kanten oder Ecken positioniert sind.

### Abbildungen 5a bis 5d

Die Abbildungen 5a bis 5d illustrieren exemplarisch vorteilhafte Auftragungsschemata der ersten Klebedichtmasse 4 (innere durchgezogene Linie) und der zweiten Klebemasse 5 (symbolisiert durch Punkte bzw. gestrichelte Linien) auf der Windschutzscheibe 3. In allen vier Szenarien umläuft die erste Klebedichtmasse 4 den Randbereich der Hauptfläche der Scheibe 3 bzw. 30 strangförmig. Die zweite Klebemasse 5 ist hingegen punktuell entweder a.) in den Ecken der Scheibe 3 bzw. 30 oder b.) in der Mitte der jeweiligen Kanten appliziert. Alternativ ist auch das Aufgeben der zweiten Klebemasse 5 auf gegenüberliegende, grössere Randbereiche bis hin zu ganzen Kanten der Verglasung 3 bzw. 30 möglich, wie in c.) und d.) gezeigt. Diese Ausführungsbeispiele sind bezüglich der Anordnung der einzelnen Klebeflachen nicht erschöpfend. Die erste Klebedichtungsmasse 4 sollte den gesamten Verklebungsbereich der Windschutzscheibe 3 bzw. 30 strangförmig umlaufen, wohingegen die zweite Klebemasse 5 lediglich punktuell und/oder partiell appliziert wird.

### Abbildung 6

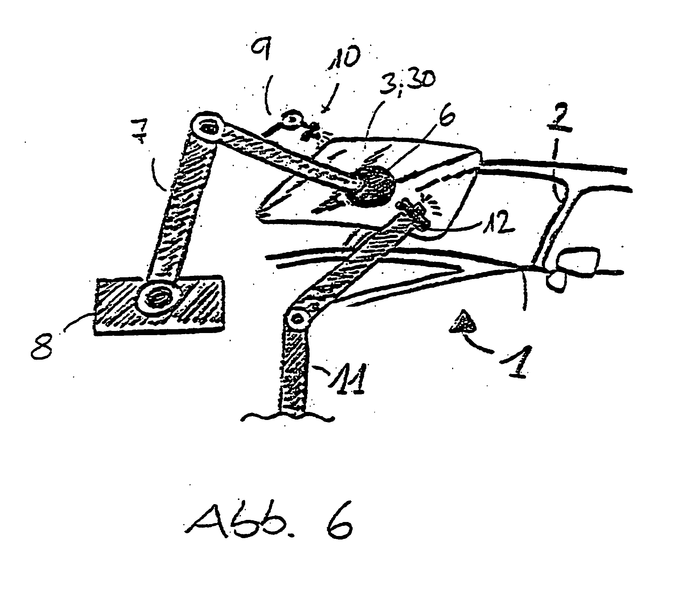

In Abbildung 6 sind Varianten einer Fertigungsstrassen-Vorrichtung gezeigt, welche einen Roboterarm 7, eine Steuereinheit 8 sowie eine Greifvorrichtung 6 zum Heranführen und Halten der Scheibe 3 oder 30 in dem Tragrahmen 2 einer Karosserie 1 beinhaltet. Als Greifvorrichtung 6 werden bevorzugterweise auf Unterdruck basierende Greifvorrichtungen 6 verwendet. Zusätzlich sind eine oder mehrere Einrichtung(en) 10 bzw. 12 zum punktuellen und/oder partiellen Beaufschlagen mit einem äusseren Energieeinfluss, insbesondere eine oder mehrere Lampen des zur Härtung der jeweiligen zweiten Klebemasse 5 geeigneten Spektralbereichs vorgesehen. Die Einrichtung 10 bzw. 12 zum punktuellen und/oder partiellen Beaufschlagen mit einem äusseren Energieeinfluss kann sich hierbei mit einem zusätzlichen Roboterarm 9 auf dem Roboterarm des Greifers 7 befinden. In einer anderen Variante einer geeigneten Fertigungsstrassen-Vorrichtung ist eine Einrichtung 12 zum punktuellen und/oder partiellen Beaufschlagen mit einem ausseren Energieeinfluss auf einem weiteren, von dem Roboterarm 7 mechanisch unabhängigen Roboterarm 11 untergebracht. Der verfahrenstechnische Ablauf sieht vor, dass die Scheibe durch den Greifer in den Tragrahmen geführt und von diesem dort solange gehalten wird, wie die zweite Klebemasse durch den äusseren Energieeinfluss selektiv gehärtet wird. Eine derartig kombinierte Fertigungsstrassen-Vorrichtung ermöglicht also eine vollständige Automatisierung der vorstehend beschriebenen Verfahren. Selbstverständlich kann das Heranführen und Halten der Scheibe in dem Tragrahmen während der Beaufschlagung mit dem äusseren Energieeinfluss auch mittels manuell bedienbaren Greifvorrichtungen in Analogie zu Greifvorrichtung 6 erfolgen.

### Beispiel 1

Dieses Beispiel beschreibt die Härtungsgeschwindigkeit einer zweiten, hier einer lichtvernetzenden Klebemasse in Abhängigkeit von verschiedenen Glasarten, insbesondere Verbundgläsern, wie sie typischerweise im Fahrzeugbau eingesetzt werden. Hierbei erfolgte die Bestrahlung der Klebemasse *(DELO-Photobond VE 53517, sensitiv im Wellenlängenbereich von 380 nm - 450 nm,* Schichtdicke 2 mm) jeweils durch das Glas hindurch bei einem Lampenabstand zum Glas von 0.5 cm bis 5 cm. Die Intensität der UVA-Strahlung auf der der Lampe abgewandten Seite der Scheibe und die Durchhärtungszeit der Klebemasse wurden bestimmt, wobei eine Punktlichtquelle *(DeloLux 04,* Wellenlangen 330-500 nm, Intensität: 1.500 mW/cm²) verwendet wurde (Tabelle 1).

**Tabelle 1**

| **Glastyp** | **Intensität (UVA)** | **Härtungszeit** |
|---|---|---|
| Flachglas | 1.100 mW/cm² | < 5 s |
| | | |
| Sicherheitsglas (wenig eingefärbt) | 600 mW/cm² | 5 s |
| | | |
| Verbundglas (nicht eingefärbt) | 40 mW/cm² | 5 s |
| | | |
| Verbundglas (wenig eingefärbt) | 25 mW/cm² | 5 s |
| | | |
| Verbundglas (mittel eingefärbt) | 1,2 mW/cm² | 10 s |
| | | |
| Verbundglas (stark eingefärbt) | 0,1 mW/cm² 0,1 mW/cm² | 20 s 20 s |

Das Beispiel zeigt, dass handelsüblich verwendete Windschutzscheiben genügende Transmission auch von UVA-Strahlung zulassen, um eine darunter befindliche lichtvernetzende Klebemasse in jedenfalls weniger als einer Minute zum Aushärten zu bringen. Selbstverständlich lassen sich noch kürzere Hartungszeiten durch Verwendung leistungsstärkerer Lampen erzielen.

### Beispiel 2

Dieses Beispiel dient zur Veranschaulichung der Belastbarkeit der mittels einer zweiten, hier einer lichtvernetzenden Klebemasse gemäss Beispiel 1 herbeigeführten Verbindung einer Verglasung und nach typischerweise im Fahrzeugbau angewendeten Verfahren lackierter Bleche. In die Untersuchung einbezogen wurden exemplarisch lackierte Bleche mit einem kathodischen Tauchlack, einem Uni-Decklack (weiss) und einem Metallic-Decklack (silber). Hierzu wurden die lackierten Bleche mit einer 2 mm starken Teflon-Schablone abgedeckt, welche zwei Aussparungen im Abstand von 20 cm mit einem Durchmesser von jeweils 11 mm aufweist. Diese beiden Aussparungen wurden mit der Klebedichtungsmasse *DELO-Photobond VE* 53517 ausgefüllt, so dass sich eine Klebefläche von ∼1 cm² je Klebepunkt ergibt. Die Anordnung wird mit einem Flachglas von 15 cm x 30 cm und einem Eigengewicht von 500 g abgedeckt. Die Aushärtung der Klebedichtungsmasse erfolgte mit einer punktförmigen Lichtquelle DeloLux 04 (Wellenlängen: 330-500 nm, Intensität: 1.500 mW/cm²) und einer Belichtungsdauer von 5 Sekunden. Die so erhaltenen Probekorper wurden in einem Winkel von 60° auf einem fahrbaren, ungefederten Transportgerat eingespannt und mit einem Gewicht von 20 kg belastet, wobei die resultierende Kraft parallel zum Untergrund und von der Scheibe weg gerichtet wirkte. Die gesamte Prüfanordnung wurde 20x binnen 5 Minuten im Schrittempo über eine Rüttelstrecke gefahren, welche aus zwei eckigen Stäben von 5 mm Dicke bestand. Die Qualität der Verklebungen wurde anschliessend beurteilt. Bei keiner der geprüften Anordnungen wurde bei Versuchsabschluss ein Abplatzen der Verklebung beobachtet.
Das Beispiel zeigt, dass im Modellversuch bereits zwei Fixierungspunkte durch eine geeignet gewählte Klebemasse aureichend sind, um eine Verglasung auf einem lackierten Blechteil in der Schräge zu fixieren, auch wenn anschliessend eine Rüttelstrecke durchfahren wird.

### Beispiel 3a

Dieses Beispiel beschreibt die Verwendung einer feuchtigkeitshärtenden Klebedichtungsmasse (EFBOND DA 280) in Kombination mit einer zweiten, hier einer lichtvernetzenden Klebemasse (DELO-Photobond VE 53517) zur Verklebung einer Scheibe auf einer nach einem für den Fahrzeugbau typischen Verfahren lackierten Metallfläche. Die feuchtigkeitshärtende Klebedichtmasse wurde hierbei die Scheibe in Form einer Dreiecksraupe umlaufend aufgetragen. Mittels einer 2 mm starken Teflon-Schablone, welche zwei Aussparungen im Abstand von 20 cm mit einem Durchmesser von jeweils 11 mm aufweist, wurde die Klebedichtungsmasse *DELO-Photobond VE 53517* appliziert, so dass sich eine Klebefläche von ∼1 cm² je Klebepunkt ergibt. Die Anordnung wird mit einem Flachglas von 15 cm x 30 cm bei einem Eigengewicht von 500 g abgedeckt. Die lichtvernetzenden Klebedichtpunkte wurden durch die Scheibe hindurch bestrahlt (Lichtquelle: DeloLux 04, Wellenlängen: 330-500 nm, Intensität: 1.500 mW/cm², Belichtungszeit: 5 Sekunden). Die Prüfanordnung wurde anschliessend in eine Position von 60° in Bezug auf den Untergrund gebracht und die Glasscheibe mit einem Gewicht von 20 kg belastet, wobei die Kraft parallel zum Untergrund und von der Scheibe weg gerichtet wirkte. Die Scheibe verblieb in ihrer Position, auch bei Durchfahren der in Beipiel 2 beschriebenen Rüttelstrecke.

### Beispiel 3b

Dieses Beispiel unterscheidet sich von Beispiel 3a lediglich dadurch, dass keine lichtvernetzende Klebemasse appliziert wurde. Dies resultierte in sofortigem Abrutschen der Scheibe von dem lackierten Blech nach dem Aufrichten der Prüfanordnung in eine Position von 60° in Bezug auf den Untergrund. Dies unterstreicht sowohl die Effizienz als auch die Notwendigkeit der erzielten Fixierung durch die zweite Klebemasse aus Beispiel 3a.

## Patentansprüche

1. Verfahren zum Befestigen einer Fahrzeugscheibe (3;30), insbesondere an einem Tragrahmen (2) eines Fahrzeugs (1), bei welchem eine Klebedichtungsmasse (4) die Scheibe umlaufend mit dem Tragrahmen (2) verbindet, **dadurch gekennzeichnet, dass**
die Scheibe durch eine zweite Klebemasse (5) in wenigstens einem Teil ihres Randbereichs am Tragrahmen (2) befestigt wird, und dass die zweite Klebemasse (5) zeitlich vor der ersten Klebedichtungsmasse (4) gehärtet wird.

2. Verfahren nach Anspruch 1, bei welchem als zweite Klebemasse (5) eine lichtvernetzende Klebemasse eingesetzt wird, welche vor dem Aushärten der ersten Klebedichtungsmasse (4) gehärtet wird.

3. Verfahren nach Anspruch 1, bei welchem als zweite Klebemasse (5) eine mittels Wärmezufuhr härtbare Klebemasse eingesetzt wird, welche vor dem Aushärten der ersten Klebedichtungsmasse (4) gehärtet wird.

4. Verfahren nach Anspruch 1, bei welchem als zweite Klebemasse (5) eine mittels Wärmezufuhr härtbare Klebemasse eingesetzt wird,
**dadurch gekennzeichnet, dass** die zur Aushärtung der zweiten Klebemasse (5) erforderliche Wärmeenergie durch Bestrahlung mit Mikrowellen zugeführt wird.

5. Verfahren nach einem der Ansprüche 1 bis 4,
**dadurch gekennzeichnet, dass** die Härtung der zweiten Klebemasse (5) durch Energiezufuhr nach dem Verbinden von Scheibe (3;30) und Tragrahmen (2) initiiert wird.

6. Verfahren nach einem der Ansprüche 1 bis 4,
**dadurch gekennzeichnet, dass** die Härtung der zweiten Klebemasse (5) durch Energiezufuhr vor dem Verbinden von Scheibe (3;30) und Tragrahmen (2) initiiert wird.

7. Verfahren nach Anspruch 1, bei welchem als zweite Klebemasse (5) eine schnell härtende Zwei-Komponenten (2K) Klebemasse eingesetzt wird.

8. Verfahren nach Anspruch 7, wobei die Härtung der zweiten Klebemasse (5) nach dem Auftragen durch Wärmezufuhr beschleunigt wird.

9. Verfahren nach einem der Ansprüche 1 bis 8,
**dadurch gekennzeichnet, dass** die zweite Klebemasse (5) lediglich lokal begrenzt bezogen auf die gesamte Klebefläche eingesetzt wird, bevorzugterweise an gegenüberliegen Kanten und/oder Punkten.

10. Verfahren nach einem der Ansprüche 1,2, 5 oder 9, bei welchem eine Verglasung (30) mit einer für Licht des UV- und/oder des sichtbaren Spektralbereichs undurchlässigen Abdeckung (31) im Bereich der Auftragstelle(n) der ersten Klebedichtungsmasse (4) bereitgestellt wird, welche Abdeckung (31) wenigstens eine Aussparung (32) aufweist,
**dadurch gekennzeichnet, dass** die zweite Klebemasse (5) im Bereich der Aussparungen (32) der Abdeckung (31) aufgetragen und nach dem Aufbringen der Verglasung (30) auf den Tragrahmen (2) mittels Bestrahlung mit Licht des UV- und/oder des sichtbaren Spektralbereichs durch die Verglasung (30) im Bereich der Aussparung (32) der Abdeckung (31) gehärtet wird.

11. Verfahren nach einem der Ansprüche 1-10,
**dadurch gekennzeichnet, dass** ein Tragrahmen (2) bereitgestellt wird, welcher mindestens eine partielle Erhöhung (20) aufweist, auf welcher die zweite Klebemasse (5) appliziert wird.

12. Fahrzeugscheibe (30) zum Verkleben mit einem Tragrahmen (2) nach einem der Ansprüche 1, 2, 5, 9, 10 oder 11 mit einer für Licht des UV- und/oder des sichtbaren Spektralbereichs undurchlässigen Abdeckung (31) zum Schutz einer ersten Klebedichtungsmasse (4) vor Licht des UV- und/oder des sichtbaren Spektralbereichs,
**dadurch gekennzeichnet, dass** die Abdeckung (31) wenigstens eine Aussparung (32) aufweist, welche die Transmission von Licht des UV- und/oder des sichtbaren Spektralbereichs durch die Verglasung (30) zulässt.

13. Fahrzeug beinhaltend eine Verglasung (3;30), welche mittels einer ersten, strangförmig umlaufenden Klebedichtungsmasse (4) an einem Tragrahmen (2) befestigt ist,
**dadurch gekennzeichnet, dass** die Verglasung (3;30) durch eine zweite, partiell auf den Tragrahmen (2) oder die Verglasung (3;30) aufgetragene Klebemasse (5) am Tragrahmen (2) fixiert ist.

14. Verwendung einer ersten Klebedichtungsmasse (4) und einer zweiten Klebemasse (5) zum Befestigen einer Verglasung (3;30) an einem Tragrahmen (2) eines Fahrzeugs (1),
**dadurch gekennzeichnet, dass** die zweite, der Fixierung der Verglasung (3;30) dienende Klebemasse (5), welche partiell/punktuell neben der ersten Klebedichtungsmasse (4) aufgetragen wird, selektiv vor der ersten Klebedichtungsmasse (4) aushärtbar ist.

15. Befestigungssystem zum Montieren einer Scheibe (3;30) an einem Tragrahmen (2) einer Karosserie (1), beinhaltend
eine erste Klebedichtungsmasse (4), welche eine dauerelastische sowie hochbelastbare Verbindung zwischen der Verglasung (3;30) und dem Tragrahmen (2) herstellt, vorzugsweise eine auf Polyurethanen basierende Klebedichtmasse und eine zweite, der Fixierung der Scheibe dienende Klebemasse (5), welche durch einen äusseren Energieeinfluss steuerbar selektiv vor der ersten Klebedichtungsmasse (4) härtbar ist.

16. Anordnung zum Befestigen einer Scheibe (3;30) an einem Tragrahmen (2) eines Fahrzeugs (1) nach einem der Ansprüche 1 bis 11, enthaltend eine Einrichtung zum Zuführen und Ausrichten (6;7;8) der Scheibe (3;30) in der Befestigungslage,
**dadurch gekennzeichnet, dass** eine Einrichtung zur partiellen Bestrahlung mit UV-Licht und/oder Licht des sichtbaren Spektralbereichs (9;10;11;12) von wenigstens einer Klebestelle vorgesehen ist.

## Claims

1. Method for fastening a vehicle window (3; 30), in particular to a supporting frame (2) of a vehicle (1), in which an adhesive sealing compound (4) peripherally bonds the window to the supporting frame (2), **characterized in that** the window is fastened to the supporting frame (2) by a second adhesive compound (5) in at least part of its edge region, and **in that** the second adhesive compound (5) is cured at a time before the first adhesive sealing compound (4).

2. Method according to Claim 1, in which a photocrosslinking adhesive compound which is cured before the curing of the first adhesive sealing compound (4) is used as the second adhesive compound (5).

3. Method according to Claim 1, in which an adhesive compound which can be cured by means of heat being supplied and which is cured before the curing of the first adhesive sealing compound (4) is used as the second adhesive compound (5).

4. Method according to Claim 1, in which an adhesive compound which can be cured by means of heat being supplied is used as the second adhesive compound (5), **characterized in that** the thermal energy required for the curing of the second adhesive compound (5) is supplied by irradiation with microwaves.

5. Method according to one of Claims 1 to 4, **characterized in that** the curing of the second adhesive compound (5) is initiated by energy being supplied after the bonding of the window (3; 30) and the supporting frame (2).

6. Method according to one of Claims 1 to 4, **characterized in that** the curing of the second adhesive compound (5) is initiated by energy being supplied before the bonding of the window (3; 30) and the supporting frame (2).

7. Method according to Claim 1, in which a rapidly curing two-component (2K) adhesive compound is used as the second adhesive compound (5).

8. Method according to Claim 7, the curing of the second adhesive compound (5) being accelerated after application by heat being supplied.

9. Method according to one of Claims 1 to 8, **characterized in that** the second adhesive compound (5) is only used in a locally limited area with respect to the overall adhesive area, preferably at opposing edges and/or points.

10. Method according to one of Claims 1, 2, 5 or 9, in which a glazing (30) with a covering (31) that is impermeable to light of the UV and/or visible spectral range is provided in the region of the application point(s) of the first adhesive sealing compound (4), which covering (31) has at least one clearance (32), **characterized in that** the second adhesive compound (5) is applied in the region of the clearances (32) of the covering (31) and, after the glazing (30) has been applied to the supporting frame (2), is cured by means of irradiation with light of the UV and/or visible spectral range through the glazing (30) in the region of the clearance (32) of the covering (31).

11. Method according to one of Claims 1-10, **characterized in that** a supporting frame (2) which has at least one partial elevation (20), on which the second adhesive compound (5) is applied, is provided.

12. Vehicle window (30) for adhesively bonding to a supporting frame (2) according to one of Claims 1, 2, 5, 9, 10 or 11 with a covering (31) that is impermeable to light of the UV and/or visible spectral range for protecting a first adhesive sealing compound (4) from light of the UV and/or visible spectral range, **characterized in that** the covering (31) has at least one clearance (32), which allows the transmission of light of the UV and/or visible spectral range through the glazing (30).

13. Vehicle comprising a glazing (3; 30) which is fastened to a supporting frame (2) by means of a first adhesive sealing compound (4) running around the periphery in the form of a strand, **characterized in that** the glazing (3; 30) is fixed to the supporting frame (2) by a second adhesive compound (5), applied partially to the supporting frame (2) or the glazing (3; 30).

14. Use of a first adhesive sealing compound (4) and a second adhesive compound (5) for fixing a glazing (3; 30) to a supporting frame (2) of a vehicle (1), **characterized in that** the second adhesive compound (5) serving for fixing the glazing (3; 30), which is applied partially/at certain points next to the first adhesive sealing compound (4), can be selectively cured before the first adhesive sealing compound (4).

15. Fastening system for mounting a window (3; 30) on a supporting frame (2) of a vehicle body (1), comprising a first adhesive sealing compound (4), which establishes a bond that is permanently flexible and can withstand high stress between the glazing (3; 30) and the supporting frame (2), preferably a polyurethane-based adhesive sealing compound, and a second adhesive compound (5) serving for fixing the window, which can be cured in a selectively controllable manner before the first adhesive sealing compound (4) by the influence of external energy.

16. Arrangement for fastening a window (3; 30) to a supporting frame (2) of a vehicle (1) according to one of Claims 1 to 11, comprising a device for supplying and aligning (6; 7; 8) the window (3; 30) in the fastening position, **characterized in that** a device for the partial irradiation of at least one adhesive location with UV light and/or light of the visible spectral range (9; 10; 11; 12) is provided.

## Revendications

1. Procédé de fixation d'une vitre d'un vehicule (3; 30), en particulier sur l'encadrement de support (2) d'un véhicule (1), dans lequel une pâte adhésive d'étanchéité (4) relie la périphérie de la vitre à l'encadrement de support (2), cara ctérisé en ce que, sur au moins une partie de sa périphérie, la vitre est fixée à l'encadrement de support (2) par une deuxième pâte adhésive, et en ce que la deuxième pâte adhésive (5) est durcie avant la première pâte adhésive (4).

2. Procédé selon la revendication 1, dans lequel on utilise comme deuxième pâte adhésive (5) une pâte adhésive qui se réticule à la lumière, et qui est durcie avant le durcissement de la première pâte adhésive (4).

3. Procédé selon la revendication 1, dans lequel on utilise c omme deuxième pâte adhésive (5) une pâte adhésive durcissable par apport de chaleur, qui est durcie avant le durcissement de la première pâte adhésive (4).

4. Procédé selon la revendication 1, dans lequel on utilise comme deuxième pâte adhésive (5) une pâ te adhésive durcissable par apport de chaleur, **caractérisé en ce que** l'énergie thermique nécessaire pour le durcissement de la deuxième pâte adhésive (5) est apportée par irradiation par des micro-ondes.

5. Procédé selon l'une des revendications 1 à 4, **caractérisé en ce que** le durcissement de la deuxième pâte adhésive (5) est lancé par apport d'énergie après que la vitre (3; 30) a été reliée à l'encadrement de support (2).

6. Procédé selon l'une des revendications 1 à 4, **caractérisé en ce que** le durcissement de la deuxième pâte adhésive (5) est lancé par apport d'énergie avant que la vitre (3; 30) ait été reliée à l'encadrement de support (2).

7. Procédé selon la revendication 1, dans lequel on utilise comme deuxième pâte adhésive (5) une pâte adhésive à deux composants (2K) et à durcissement rapide.

8. Procédé selon la revendication 7, dans lequel, après avoir appliqué la deuxième pâte adhésive (5), on accélère son durcissement par apport de chaleur.

9. Procédé selon l'une des revendications 1 à 8, **caractérisé en ce que** la deuxième pâte adhésive (5) n'est utilisée que sur des zones locales limitées de la totalité de la surface à coller, de préférence sur des bords et/ou sur des points opposés.

10. Procédé selon l'une des revendications 1, 2, 5 ou 9, dan s lequel on prépare un vitrage (30) doté d'un recouvrement (31) opaque à la lumière dans la plage spectrale des UV et/ou du visible dans la zone du ou des emplacements d'application de la première pâte adhésive d'étanchéité (4), le recouvrement présentant au moins une découpe (32), **caractérisé en ce que** la deuxième pâte adhésive (5) est appliquée dans la zone des découpes (32) du recouvrement (31), et est durcie dans la zone de la découpe (32) du recouvrement (31) après l'application du vitrage (30) sur l'e ncadrement de support (2), par irradiation par de la lumière dans la plage spectrale des UV et/ou du visible.

11. Procédé selon l'une des revendications 1 à 10, **caractérisé en ce que** l'on prépare un encadrement de support (2) qui présente au moins partiellement un relief (20) sur lequel la deuxième pâte adhésive (5) est appliquée.

12. Vitre (30) de véhicule destinée à être collée à un encadrement de support (2) selon au moins l'une des revendications 1, 2, 5, 9, 10 ou 11, dotée d'un recouvrement (31) opaq ue à la lumière dans la plage spectrale des UV et/ou du visible pour protéger une première pâte adhésive d'étanchéité (4) de la lumière dans la plage spectrale des UV et/ou du visible, **caractérisé en ce que** le recouvrement (31) présente au moins une découpe (32) qui permet la transmission de la lumière dans la plage spectrale des UV et/ou du visible à travers le vitrage (30).

13. Véhicule qui contient un vitrage (3; 30) fixé à un encadrement de support (2) au moyen d'une première pâte adhésive d'étanchéité (4) en cordon périphérique, **caractérisé en ce que** le vitrage (3; 30) est fixé sur l'encadrement de support (2) par une deuxième pâte adhésive (5) appliquée sur des parties de l'encadrement de support (2) ou du vitrage (3; 30).

14. Utilisation d'une premi ère pâte adhésive d'étanchéité (4) et d'une deuxième pâte adhésive (5) pour fixer un vitrage (3; 30) sur un cadre de support (2) d'un véhicule (1), **caractérisée en ce que** la deuxième pâte adhésive (5), qui sert à fixer le vitrage (3; 30) et qui est appliquée par parties ou par points en plus de la première pâte adhésive d'étanchéité (4), peut être durcie indépendamment de la première pâte adhésive d'étanchéité (4).

15. Système de fixation pour le montage d'une vitre (3; 30) sur un encadrement de support (2 ) d'une carrosserie (1), qui contient une première pâte adhésive d'étanchéité (4) qui établit entre le vitrage (3; 30) et l'encadrement de support (2) une liaison durablement élastique, et qui résiste à des charges élevées, de préférence une pâte adhésive d'étanchéité à base de polyuréthane, et une deuxième pâte adhésive (5), qui sert à fixer la vitre, et qui peut être durcie de manière contrôlée avant la première pâte adhésive d'étanchéité, (4) par apport d'énergie extérieure.

16. Agencement de fixation d'une vitre (3; 30) sur un encadrement de support (2) d'une carrosserie (1) selon l'une des revendications 1 à 11, qui contient un dispositif (6; 7; 8) d'amenée et d'orientation de la vitre (3; 30) dans sa position de fixation, **caractérisé en ce que** un dispositif est prévu pour irradier au moins un emplacement de collage par de la lumière (9; 10; 11; 12) située dans la plage spectrale des UV et/ou du visible.
